# FASCICULE DE BREVET EUROPEEN

(11) **EP 3 869 125 B1**
(45) Date de publication et mention de la délivrance du brevet: **16.10.2024**
(21) Numéro de dépôt: 20158502.3
(22) Date de dépôt: 20.02.2020
(51) Int. Cl.: F25B 27/00, F25B 41/00, F25B 45/00, F25B 49/02, F24F 5/00, F25B 41/20

(54) **SYSTÈME FRIGORIFIQUE ET PROCÉDÉ DE FONCTIONNEMENT D'UN TEL SYSTÈME**
KÜHLSYSTEM UND BETRIEBSVERFAHREN DAFÜR
REFRIGERATION SYSTEM AND OPERATING METHOD THEREOF

(43) Date de publication de la demande: 25.08.2021
(73) Titulaire: Cryo Pur, 91300 Massy (FR)
(72) Inventeur: CLODIC, Denis, 91300 Massy (FR)
(74) Mandataire: Demulsant, Xavier

(56) Documents cités:
- EP-A1- 3 361 184
- EP-A2- 2 921 326
- WO-A2-2013/119489
- GB-A- 2 461 029
- US-A- 4 831 835

## Description

### Domaine technique

L'invention se rapporte à un système frigorifique et un procédé de fonctionnement d'un tel système, entre autres pour assurer le sous-refroidissement de fluides frigorigènes.

### Etat de la technique

Les systèmes à compression de vapeur de l'état de la technique, conçus pour la production frigorifique ou pour le pompage de chaleur, comportent quatre composants génériques : deux échangeurs, un condenseur et un évaporateur, un compresseur et un détendeur.

Un cycle à compression de vapeur s'effectue avec un fluide à changement de phase liquide-vapeur, appelé fluide frigorigène, qui est choisi en fonction des niveaux de température d'évaporation et de condensation.

Le fluide s'évapore entièrement dans l'évaporateur à la basse pression du système, après la détente à travers le détendeur.

Le frigorigène en phase vapeur est comprimé à la haute pression du système par le compresseur, puis il est condensé à cette haute pression dans le condenseur et il doit être entièrement liquide à la sortie de ce condenseur.

La contrainte de fonctionnement générique est que le détendeur n'accepte qu'un fluide en phase liquide, la présence de bulles de gaz dans le liquide entraînant des dysfonctionnements du détendeur, qui peuvent entraîner le blocage du débit.

Il faut donc que le fluide frigorigène soit sous-refroidi, en amont du détendeur, c'est-à-dire que la température à la sortie du condenseur doit être inférieure à la température saturante de condensation.

Le sous-refroidissement est assuré par le condenseur, environ 10 % du volume du condenseur assurant conventionnellement ce sous-refroidissement. Ces 10 % du volume du condenseur sont situés dans sa partie inférieure.

Le fonctionnement réel du système à compression de vapeur est à débit variable, en fonction de la puissance frigorifique ou calorifique requise et selon la saison pour les conditions de rejet de chaleur au milieu ambiant. Le débit de fluide frigorigène varie d'un facteur 2 à 5 entre le minimum et le maximum.

La masse de fluide frigorigène chargée dans le système doit correspondre au débit maximum, sinon l'alimentation du détendeur serait insuffisante.

Le système est donc surchargé en fluide frigorigène lorsque le débit est nettement inférieur au débit maximum.

La conséquence pratique est qu'il faut stocker cette masse en excès, par l'introduction d'un volume à la haute pression du système.

Ce volume est un réservoir, soit disposé en série à l'aval du condenseur, soit intégré dans le condenseur.

A noter que pour éviter de recharger trop rapidement le système, pour compenser les petites fuites de fluide frigorigène, les constructeurs chargent le système d'au moins 10% à 30 % au-delà de la charge nécessaire au fonctionnement à débit maximal.

En résumé, du fluide frigorigène est obligatoirement stocké à la haute pression du système, dans un réservoir intégré dans la liaison entre le condenseur et le détendeur.

Ce stock de frigorigène à la haute pression doit être sous-refroidi jusqu'à l'amont du détendeur, ce qui n'est pas toujours assuré, loin s'en faut.

L'état de l'art pour assurer le sous-refroidissement du fluide frigorigène a donné lieu, et depuis longtemps, à de nombreux brevets pour des solutions très différentes.

WO2014/035134 (Korea Energy) propose d'assurer le sous-refroidissement par le changement de volume du réservoir.

US6378323 (Carrier) propose d'introduire un échangeur supplémentaire à l'intérieur du réservoir haute pression, pour maintenir le sous-refroidissement.

US6170272 (Systematic réfrigération) propose le sous-refroidissement du fluide frigorigène haute pression, par un système frigorifique complémentaire, uniquement dédié au sous-refroidissement.

US4862702 (Neal) propose le contrôle de la haute pression sur le réservoir haute pression par la régulation d'une injection de vapeur haute pression dans le réservoir, pour éviter que la pression en amont du détendeur soit trop basse et pour assurer le sous-refroidissement.

US 4831835 (Beehler) décrit un système frigorifique comprenant un compresseur, un condenseur, un détendeur, un évaporateur et un réservoir d'un fluide frigorigène, une ligne de frigorigène liquide reliant le condenseur au détendeur, le réservoir étant installé sur une ligne connectée en parallèle de la ligne de frigorigène liquide.

EP 2921326 (Audi) décrit un système de climatisation de véhicule automobile et un circuit frigorifique. En plus du réservoir de réfrigérant déjà intégré en standard dans un condenseur, un réservoir de réfrigérant est prévu, conçu comme un agencement cylindre-piston. En fonction des valeurs mesurées par des capteurs de pression et température, une unité de commande pilote un actionneur pour le déplacement du piston. La position du piston est fonction du sous-refroidissement du réfrigérant.

GB2461029A (Greenfield Energy) montre un système contrôlé à partir de données mesurées sur un circuit secondaire.

### Objets de l'invention

Un premier objet de l'invention est de proposer un dispositif et un procédé assurant un sous-refroidissement satisfaisant d'un fluide frigorigène, dans un système frigorifique, permettant de supprimer le risque de présence de bulles de gaz dans le liquide frigorifique, de telles bulles de gaz pouvant entraîner des dysfonctionnements du détendeur, qui peuvent entraîner le blocage du débit.

Un autre objet de l'invention est de proposer un procédé et un dispositif assurant un sous-refroidissement satisfaisant d'un fluide frigorigène, dans un système frigorifique, et permettant une adaptation de la masse circulante de fluide frigorigène aux variations de débit du fluide frigorigène, dans un système à compression de vapeur.

### Présentation générale de l'invention

A ces fins, il est proposé, en premier lieu, un système frigorifique selon la revendication 1.

Avantageusement, le réservoir est connecté à la ligne de frigorigène liquide par deux conduits, un premier conduit étant pourvu d'une vanne permettant la décharge du fluide frigorigène vers le réservoir, et un deuxième conduit étant pourvu d'une vanne permettant la décharge du fluide frigorigène vers le détendeur.

Avantageusement, le système frigorifique comprend, connectés aux moyens de supervision et de contrôle, un mesureur de pression sur le circuit de fluide frigorigène reliant le compresseur et le condenseur, et un mesureur de température sur le circuit puits en aval du condenseur.

Avantageusement, le système frigorifique comprend, connectés aux moyens de supervision et de contrôle, un mesureur de température sur le circuit de fluide frigorigène reliant l'évaporateur et le compresseur.

Avantageusement, la vanne permettant la décharge du fluide frigorigène vers le réservoir, et la vanne permettant la décharge du fluide frigorigène vers le détendeur sont à ouverture commandée par les moyens de supervision et de contrôle.

Selon diverses mises en oeuvre, le fluide frigorigène comprend de l'ammoniac, un hydrocarbure, ou un fluide fluoré, ou un mélange de fluide frigorigènes.

Il est proposé, selon un deuxième aspect, un procédé de fonctionnement d'un système frigorifique tel que présenté ci-dessus, comprenant le maintien d'un sous-refroidissement prédéfini du fluide frigorigène sortant du condenseur par contrôle dynamique de la masse circulante de fluide frigorigène, en transférant du fluide frigorigène dans ou vers le un réservoir installé en parallèle de la liaison liquide entre le condenseur et le détendeur, en fonction de l'écart de températures entre la température de condensation du liquide saturant et la température de sortie du condenseur.

Avantageusement, la température de condensation saturante du liquide est calculée par l'électronique de supervision du système frigorifique qui dispose en mémoire des propriétés thermodynamiques du fluide frigorigène chargé dans le système frigorifique.

Avantageusement, la phase gazeuse du fluide contenu dans le réservoir est raccordée à la plus haute pression du système frigorifique, en amont du condenseur.

La mesure du sous-refroidissement et l'ajustement de la masse circulante de fluide frigorigène permettent de maintenir un niveau faiblement variable de fluide frigorigène en partie basse du condenseur.

La liaison entre le condenseur et le détendeur est avantageusement toujours en phase liquide.

Dans certaines mises en oeuvre, le procédé comprend une étape permettant le diagnostic de fuite de fluide frigorigène hors du système frigorifique, par mise en rapport des températures d'entrée et de sortie du fluide refroidi dans l'évaporateur.

### Présentation de modes de réalisation

D'autres objets et avantages de l'invention apparaitront à la lumière d'une part de la description de la cause physique pour laquelle les dispositifs de l'état de la technique, dans lesquels un réservoir est mis en série entre le condenseur et le détendeur, limitent le sous-refroidissement, et d'autre part, de la description d'un mode de réalisation et ce en référence aux dessins annexés.

La figure 1a présente un cycle à compression de vapeur d'un fluide frigorigène, dans un diagramme pression-enthalpie massique, la pression étant en échelle logarithmique sur l'axe vertical et l'enthalpie massique sur l'axe horizontal.

La figure 1b est une vue analogue à la figure 1a, le sous-refroidissement du fluide frigorigène étant représenté par le segment C1C2.

La figure 1c est une vue analogue à la figure 1a, le fluide frigorigène à la pression de condensation sortant du condenseur sous-refroidi au point C2, et entrant dans un réservoir installé en série sur la ligne liquide qui relie le condenseur au détendeur, selon l'état de l'art.

La figure 2 représente un système frigorifique selon un mode de réalisation de l'invention.

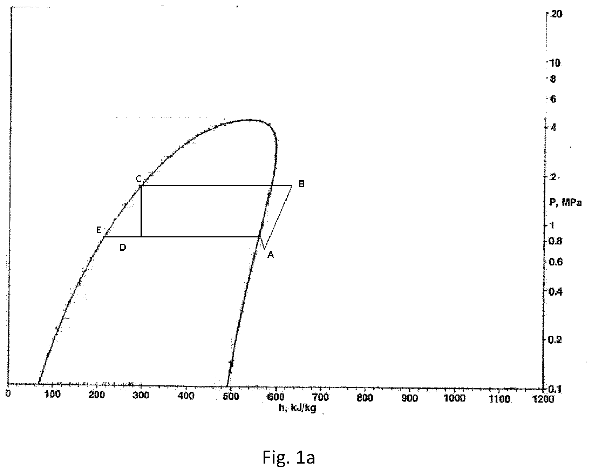

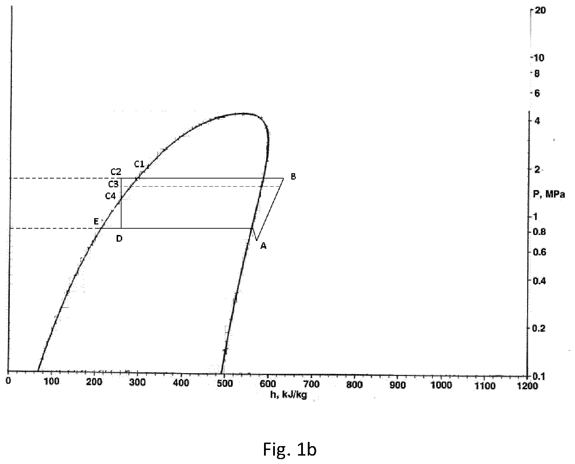

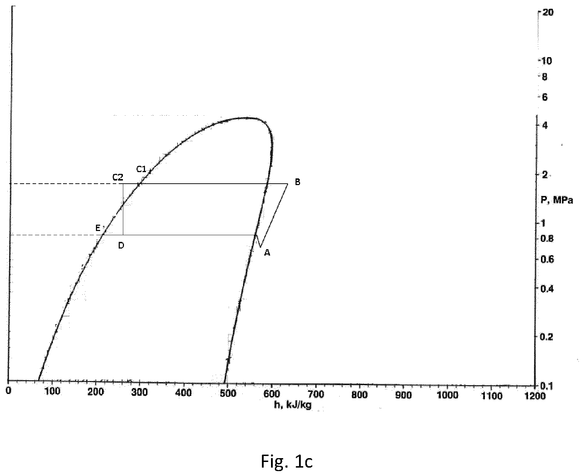

L'on se rapporte tout d'abord aux figures 1a, 1b et 1c, pour une description de la cause physique pour laquelle les dispositifs de l'état de la technique, comprenant un réservoir mis en série entre un condenseur et un détendeur, limitent le sous-refroidissement.

La figure 1a présente un cycle à compression de vapeur d'un fluide frigorigène, dans un diagramme pression-enthalpie massique.

En figure 1a, l'évolution AB correspond à la compression du fluide frigorigène, l'évolution BC à la condensation du fluide frigorigène, l'évolution CD à la détente du fluide frigorigène et l'évolution DA à l'évaporation du fluide frigorigène qui boucle le cycle.

En figure 1a, la pression est en MPa et en échelle logarithmique sur l'axe vertical, l'enthalpie massique étant en kJ/kg, sur l'axe horizontal.

La figure 1a est une représentation théorique, car le point C est exactement sur la courbe de saturation qui est le point où se condense la dernière bulle de vapeur.

La moindre perte de pression sur la liaison entre le condenseur et le détendeur entraîne la formation de bulles, il faut donc en réalité sous-refroidir le liquide frigorigène avant sa sortie du condenseur.

Ce sous-refroidissement est représenté en figure 1b par le segment C1C2.

En figure 1b, le point C3 représente l'état du fluide frigorigène toujours sous-refroidi, mais à une pression plus basse, due aux pertes de charge sur la liaison entre le condenseur et le détendeur.

Le point C4 représente la pression limite acceptable pour les pertes de charge, car le sous-refroidissement est alors nul.

Ce qui n'est pas compris usuellement est le phénomène présenté sur la figure 1c : le fluide frigorigène à la pression de condensation sort du condenseur sous-refroidi au point C2, il entre dans un réservoir installé en série sur la ligne liquide qui relie le condenseur au détendeur, selon l'état de l'art.

Le réservoir est toujours conçu partiellement rempli, pour des questions de sécurité, il dispose donc d'une interface liquide-vapeur.

Le phénomène qui se produit est lié au fait physique que le sous-refroidissement est un état hors équilibre, qui n'est assuré que dans un volume entièrement liquide.

A l'interface liquide-vapeur, le fluide frigorigène ne peut être que saturant.

La conséquence est que le fluide sous-refroidi rentrant dans le réservoir génère en son sein de la vapeur, pour retrouver la pression de saturation à l'interface liquide-vapeur.

Sur la figure 1c, la vapeur produite correspond au passage de C2 vers C1.

Cette production de vapeur se fait dans la masse du liquide, avec entrainement de bulles dans la tuyauterie de liaison entre le réservoir et le détendeur.

Le seul sous-refroidissement possible est lié à la pression statique correspondant à la hauteur géométrique du liquide frigorigène, qui n'est suffisante que pour les réservoirs verticaux bien remplis.

Cette hauteur de fluide frigorigène assure généralement un sous-refroidissement de 1°C à 2 °C, ce qui est relativement faible.

Ce phénomène de ré-ébullition du fluide sous-refroidi est mal compris et il est usuellement attribué à des pertes de charge.

L'invention permet d'éviter ces inconvénients.

Il est ainsi proposé, selon un aspect de l'invention, un procédé qui consiste à contrôler la masse circulante de fluide frigorigène en faisant entrer ou sortir du fluide frigorigène d'un réservoir installé en parallèle de la ligne de frigorigène liquide qui relie le condenseur au détendeur.

Le réservoir est connecté à cette ligne par deux vannes, l'une permettant la décharge de fluide du circuit vers le réservoir, l'autre permettant la recharge du circuit par du fluide frigorigène contenu dans le réservoir.

Avantageusement, ces vannes restent fermées, hors les courtes périodes d'ajustement de la charge de fluide frigorigène dans le circuit.

Cette disposition du réservoir en parallèle, avec transfert de fluide, assure un sous-refroidissement continu, car la sortie du condenseur est directement reliée à l'entrée du détendeur et la ligne reliant le condenseur et le détendeur est avantageusement entièrement pleine de liquide, quel que soit le débit.

Ce contrôle du sous-refroidissement est dynamique, car il s'effectue en ajustant la masse circulante de frigorigène à la puissance frigorifique requise.

Plus cette puissance frigorifique ou calorifique est élevée, plus le débit de frigorigène est proportionnellement plus élevé, et plus la masse circulante dans le circuit doit aussi être plus élevée, pour que le bas du condenseur et la ligne liquide soit entièrement pleins de fluide frigorigène liquide.

Ces dispositions permettent d'éviter que des bulles de gaz apparaissent, et permettent d'éviter la création d'un écoulement diphasique dans la ligne liquide.

Le procédé selon l'invention permet de déterminer la charge requise de fluide frigorigène dans le circuit, selon les différentes conditions de fonctionnement, à savoir, selon la puissance frigorifique, ou calorifique requise, et les conditions de température variables au condenseur.

Avantageusement, les conditions de sous-refroidissement sont toujours assurées, par le remplissage complet de liquide de la liaison condenseur et détendeur, qui dépend, selon le procédé du contrôle, de deux paramètres : la pression de condensation et le pourcentage d'ouverture du détendeur.

Pour que ces deux paramètres puissent déterminer la masse de fluide frigorigène en circulation, plusieurs conditions complémentaires sont avantageusement prises en compte.

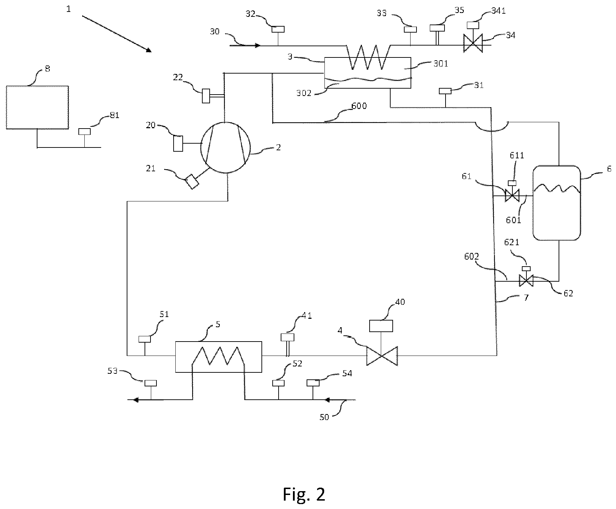

La figure 2 présente un mode de réalisation d'un système frigorifique selon l'invention.

Le système frigorifique représenté en figure 2 assure le sous-refroidissement dynamique d'un fluide frigorigène, par adaptation de la masse circulante de fluide frigorigène aux variations de débit du fluide frigorigène.

Dans le mode réalisation de la figure 2, le dispositif 1 est un système à compression de vapeur.

Le dispositif 1 comprend un compresseur 2, doté d'un contrôleur de puissance 20, d'un wattmètre 21 et d'un mesureur de pression 22 disposé au refoulement du compresseur 2, et mesurant la haute pression du dispositif 1, qui est la pression de condensation.

Le dispositif 1 comprend un condenseur 3, refroidi par un médium de refroidissement circulant dans un circuit 30 dénommé circuit puits, dans la suite de cette description.

Le débit de refroidissement est mesuré par un débitmètre 35.

Une vanne régulante 34 peut moduler le débit du médium de refroidissement.

Les températures d'entrée et de sortie du médium de refroidissement sont mesurées respectivement par les mesureurs de température 32, 33.

La température du frigorigène est mesurée à la sortie du condenseur 3, par un mesureur de température 31.

Dans le condenseur 3, on distingue deux volumes internes : le volume diphasique liquide-vapeur 301 et le volume purement liquide 302.

Le volume purement liquide 302 occupe typiquement de 2% à 10% du volume interne total du condenseur 3.

Le dispositif 1 comprend un détendeur 4, avec son électronique de contrôle 40, prenant en compte la mesure de la basse pression par un mesureur de pression 41.

Le dispositif 1 comprend un évaporateur 5, refroidissant le médium d'un circuit 50, dénommé circuit source dans la suite de cette description.

Le débit de ce médium à refroidir est mesuré par un débitmètre 54.

Les températures d'entrée et de sortie du médium à refroidir sont mesurées respectivement par des mesureurs de température 52,53.

La température du frigorigène à la sortie de l'évaporateur 5 est mesurée par un mesureur 51.

Le dispositif 1 comprend une ligne liquide 7 de liaison directe entre le condenseur 3 et le détendeur 4.

Le dispositif 1 comprend, en parallèle de cette ligne liquide 7, un réservoir de fluide frigorigène 6, maintenu continûment à la haute pression en amont du condenseur 3 par un capillaire 600.

Ce réservoir 6 est raccordé à la ligne liquide 7 par deux lignes 601, 602, dotées respectivement de vannes de régulation 61,62 avec leurs actionneurs respectifs 611,621.

Ces vannes de régulation 61, 62 sont normalement fermées.

Le dispositif 1 comprend une électronique de supervision et de contrôle 8 du système frigorifique, qui intègre l'ensemble des mesures et qui dispose des données thermodynamiques du fluide frigorigène, permettant en particulier, de calculer automatiquement la température de saturation 81 du liquide saturant, en fonction de la pression de condensation mesurée par le mesureur de pression 22.

A noter que le fluide frigorigène peut aussi bien être un corps pur, comme l'ammoniac, un hydrocarbure comme le propane, un fluide fluoré comme le R-1234ze ou un mélange de fluides frigorigènes où les températures de saturation liquide et vapeur sont différentes.

Le frigorigène est mis en circulation par le compresseur 2, avec comme résultat thermique net le transfert de la chaleur du medium à refroidir circulant dans le circuit source 50 de l'évaporateur 5 vers le circuit puits de refroidissement 30 du condenseur 3.

La puissance thermique rejetée sur le circuit de refroidissement 30 est la somme de la puissance thermique extraite à l'évaporateur 5, appelée puissance frigorifique, additionnée de la puissance thermique transmise au fluide par le compresseur 2.

Les systèmes frigorifiques fonctionnent à puissances variables, aussi bien au niveau de l'évaporateur 5 (car les besoins frigorifiques du circuit source 50 peuvent varier fortement), qu'au niveau du compresseur 2, car la puissance de compression dépend directement de l'écart de températures et donc de l'écart de pressions entre l'évaporateur 5 et le condenseur 3.

Quand cet écart varie, les puissances varient simultanément.

Deux situations de fonctionnement du système frigorifique 1 représenté en figure 2 vont maintenant être présentées.

La première situation est celle d'une augmentation de la demande frigorifique sur le circuit source 50.

Cette augmentation se manifeste par une température à l'entrée de l'évaporateur 5 sur le circuit source 50, mesurée par le mesureur de température 52, plus élevée qu'au pas de temps précédent.

La puissance frigorifique fournie par le système 1 n'a pas changée.

En conséquence, la température mesurée par le mesureur 53 sur le circuit source 50 en sortie de l'évaporateur 5 s'élève.

Ce paramètre est traité par l'électronique du contrôleur de puissance 20 du compresseur 2, qui augmente le débit aspiré de frigorigène, soit par accroissement de la vitesse de rotation du compresseur 2, soit par mise en route d'un compresseur additionnel, pour un système frigorifique à multi-compresseurs.

Le débit de frigorigène aspiré par le compresseur 2 s'accroît.

La pression d'évaporation mesurée par le mesureur de pression 41 baisse.

L'électronique de contrôle 40 du détendeur 4 recevant ce signal fait ouvrir plus grand l'orifice de passage du détenteur 4.

Le débit liquide à l'entrée du détendeur 4 s'accroit donc, ce qui a pour conséquence d'abaisser le niveau du volume purement liquide 302 dans le condenseur 3.

La réduction du volume purement liquide 302 dans le condenseur 3 réduit l'échange thermique dédié au sous-refroidissement, puisque la surface d'échange associée au volume est réduite, ce qui entraîne que l'écart diminue entre
- la température du liquide frigorigène saturant 81, calculée par l'électronique de supervision 8 à partir de la mesure de la pression de condensation par le mesureur de pression 22
- et la température de sortie du frigorigène, mesurée par le mesureur 31.

L'électronique de supervision 8 commande alors l'ouverture de la vanne 62, pour accroître progressivement la masse circulante de frigorigène dans le circuit.

Ceci fait remonter le niveau du volume purement liquide 302 en bas du condenseur 3 et, concomitamment, restaure le sous-refroidissement du frigorigène en restaurant donc l'écart de température de consigne entre la température de saturation calculée 81 et la température de sortie du condenseur 3 mesurée par le mesureur 31.

L'élévation du niveau du liquide frigorigène dans le volume 302 du condenseur 3 entraîne une augmentation du sous-refroidissement, parce que l'augmentation de volume est associée à l'augmentation de la surface d'échange avec le fluide de refroidissement du circuit puits 30, et donc à un accroissement du transfert thermique.

La deuxième situation de fonctionnement est contraire à la première situation : la puissance de refroidissement requise par le circuit source 50 diminue.

Cette diminution se manifeste par une température mesurée par le mesureur 52 plus basse qu'au pas de temps précédent.

La puissance frigorifique fournie par le système 1 n'a pas changée.

En conséquence, la température mesurée par le mesureur 53 sur le circuit source 50 en sortie de l'évaporateur 5 baisse et, de manière concomitante, la température de sortie du frigorigène de l'évaporateur 5 mesurée par le mesureur 51 diminue aussi.

Ces deux paramètres de température mesurés par les mesureurs 52, 53 sont traités respectivement par l'électronique du contrôleur de puissance 20 du compresseur 2, qui baisse le débit de frigorigène aspiré, et par l'électronique de contrôle 40 du détendeur 4, qui réduit l'orifice de passage du détenteur 4.

Le débit liquide à l'entrée du détendeur 4 se réduit donc, ce qui a pour conséquence d'élever le niveau du volume purement liquide 302 dans le condenseur 3, de-là l'écart s'accroit entre
- la température du liquide saturant 81, calculée par l'électronique de supervision 8, en fonction de la pression de condensation mesurée par le mesureur de pression 22,
- et la température de sortie du frigorigène, mesurée par le mesureur 31.

Tendanciellement, la pression de condensation peut s'accroitre aussi, indiquant que le volume purement liquide 302 devient relativement top grand.

L'électronique de supervision 8 commande alors l'ouverture de la vanne 61, pour extraire progressivement du fluide frigorigène et réduire la masse circulante de frigorigène.

Ceci fait descendre le niveau de liquide 302 en bas du condenseur 3 et, concomitamment, restaure le sous-refroidissement à sa valeur de consigne, en restaurant donc l'écart de température entre la température de saturation calculée 81 et la température de sortie du fluide frigorigène liquide du condenseur.

Le procédé selon l'invention présente de nombreux avantages.

Le procédé de contrôle de la masse circulante de fluide frigorigène assurant le débit requis pour le bon fonctionnement du détendeur 4 est avantageusement basé sur le découplage de deux fonctions qui sont intégrées dans les détendeurs thermostatiques, à savoir le contrôle de la pression d'évaporation et le contrôle de la surchauffe de la vapeur de frigorigène, en sortie de l'évaporateur 5.

La fonction de contrôle de la surchauffe a pour but d'interdire l'arrivée de liquide à l'aspiration du compresseur 2, pour préserver son intégrité.

Avantageusement, dans le procédé objet de l'invention, le détendeur 4 a comme unique fonction le contrôle de la pression d'évaporation et uniquement ce contrôle.

Avantageusement, la surchauffe est contrôlée par la variation de puissance du ou des compresseurs 2.

Selon un aspect de l'invention, dans le procédé, la variable de contrôle de la puissance de compression est la température de sortie du médium refroidi par l'évaporateur 5 et donc indirectement la température de surchauffe du fluide frigorigène.

Ce médium est un liquide, par exemple de l'eau, ou un gaz, par exemple de l'air.

Quand cette température de sortie du médium refroidi devient supérieure à la température de consigne, alors la puissance de compression est accrue.

Au contraire, quand cette température de sortie devient inférieure à la température de consigne, la puissance de compression est diminuée.

Connaissant la puissance consommée par la compression et connaissant les caractéristiques du ou des compresseurs 2, le débit de fluide frigorigène est connu et est en rapport ou non avec la masse de fluide circulante dans la totalité du circuit.

Pour assurer le sous-refroidissement désiré en amont du détendeur 4, qui est au minimum de 2 °C et qui peut être avantageusement de 5°C à 7°C, il faut qu'environ 2% à 10 % du volume du condenseur 3 soit rempli de fluide frigorigène liquide et, comme spécifié auparavant, il faut que le liquide occupe complètement le volume de liaison qui sépare le condenseur 3 de l'entrée du détendeur 4.

La pression de condensation dépend de quatre paramètres : le débit de frigorigène, la température d'entrée du médium de refroidissement du condenseur 3, le débit du médium de refroidissement, le niveau de liquide sous-refroidi en bas du condenseur 3.

La supervision informatisée du système frigorifique selon l'invention, reçoit la mesure de la pression de condensation (mesurée par le mesureur 22) et celles du débit et de la température d'entrée du médium de refroidissement qui varie lentement avec la température d'entrée du médium de refroidissement et du débit de ce médium.

Ces paramètres sont pris en compte par la supervision 8, pour définir les niveaux de la pression de condensation permettant de suivre de manière précise la variation des deux autres paramètres qui varient plus rapidement.

Si le débit de fluide frigorigène augmente, le bas du condenseur 3 se vide de son liquide, le sous-refroidissement du fluide frigorigène diminue et la température de sortie du fluide frigorigène se rapproche de la température de saturation 81, qui est calculée par la supervision 8 informatisée.

Cette réduction de l'écart entre la température de sortie et la température de saturation 81 amène à ouvrir la vanne 62 de remplissage du circuit provenant du réservoir 6 installé en parallèle de la ligne liquide 7, et ce pour accroître la masse circulante et donc la remise à niveau en fluide frigorigène du bas du condenseur 3, et ainsi la restauration du sous-refroidissement.

A noter que, concomitamment à la diminution du sous-refroidissement associé à l'accroissement du débit de fluide frigorigène, le détendeur 4 s'ouvre d'avantage, pour laisser passer plus de débit mais, s'il s'ouvre au maximum c'est que la masse circulante de fluide frigorigène tend à devenir insuffisante, ce deuxième paramètre complète ou confirme le paramètre de la réduction du sous-refroidissement.

Inversement, si la puissance frigorifique requise diminue, le débit de frigorigène diminue, la masse circulante devient trop grande, le condenseur 3 se remplit trop et la pression de condensation devient trop élevée, concomitamment à un accroissement significatif du sous-refroidissement et une réduction de l'ouverture du détendeur 4.

Les conditions sont alors réunies pour ouvrir la vanne 61 de décharge de la masse circulante vers le réservoir 6, et ce jusqu'à obtenir la valeur de consigne du sous-refroidissement.

Le procédé est mis en oeuvre par la supervision 8 du système frigorifique, qui est avantageusement une unité de programmation informatique stockant en particulier la table thermodynamique du fluide frigorigène permettant de calculer la température de saturation liquide 81 correspondant à la pression de condensation du fluide frigorigène chargé dans le système frigorifique.

Selon un aspect de l'invention, une continuité de la phase liquide dans la liaison entre le condenseur 3 et le détendeur 4 est assurée, et le nécessaire ajustement de la masse circulante de fluide frigorigène est assuré en fonction des variations de débit de fluide frigorigène.

Avantageusement, un transfert vers le réservoir 6 est réalisé si la masse circulante et trop élevée ou, inversement une extraction du fluide frigorigène vers le réservoir 6 est réalisé si la masse circulante trop faible.

Ces dispositions assurent un niveau quasi-constant de liquide en bas du condenseur 3, permettant un sous-refroidissement contrôlé, avantageusement entre 2°C et 7 °C.

La mise en oeuvre de l'invention assure le sous-refroidissement de fluides frigorigènes de manière dynamique, c'est-à-dire en adaptant la masse circulante de fluide frigorigène aux variations de débit du fluide frigorigène dans un système à compression de vapeur.

Un autre avantage du procédé de régulation dynamique de la masse circulante de fluide frigorigène en fonction des variations de débit du fluide frigorigène est qu'il permet aussi le diagnostic rapide de fuite de fluide frigorigène.

En effet, une fuite de fluide frigorigène va réduire la masse circulante de fluide frigorigène.

Le premier effet sera la montée de la température, mesurée par le mesureur de température 53, alors que la température mesurée par le mesureur 52 est restée constante.

Le compresseur 2 va accélérer, l'électronique de contrôlé 40 du détendeur 4 va ouvrir plus l'orifice de détente, le volume purement liquide 302 va baisser dans le condenseur 3.

La supervision globale va pouvoir diagnostiquer qu'il y a une demande d'accroissement de la masse circulante de fluide frigorigène, alors que la demande frigorifique du circuit source 50 n'a pas changée.

La demande de fluide supplémentaire va être accordée par l'électronique de supervision 8, mais en même temps elle va déclencher une alerte pour recherche de fuite.

## Revendications

1. Système frigorifique (1) comprenant un compresseur (2), un condenseur (3), un détendeur (4), un évaporateur (5) et un réservoir (6) d'un fluide frigorigène, le compresseur (2) assurant la mise en circulation d'un fluide frigorigène, le condenseur (3) étant refroidi par un médium de refroidissement circulant dans un circuit puits (30), l'évaporateur (5) refroidissant le médium d'un circuit source (50), une ligne de frigorigène liquide (7) reliant le condenseur (3) au détendeur (4), l'évaporateur (5) étant placé en aval du détenteur (4) et en amont du compresseur (2), le système frigorifique (1) assurant un transfert de chaleur du médium à refroidir circulant dans le circuit source (50) de l'évaporateur (5) vers le circuit puits (30) de refroidissement du condenseur (3), le réservoir (6) étant installé sur une ligne connectée en parallèle de la ligne de frigorigène liquide (7) qui relie directement le condenseur (3) au détendeur (4), **caractérisé en ce qu'**un mesureur de température (52) est configuré pour mesurer la température d'entrée du médium à refroidir sur le circuit source (50) à l'entrée de l'évaporateur (5), un mesureur de température (53) est configuré pour mesurer la température de sortie du médium à refroidir en sortie de l'évaporateur (5), le compresseur (2) étant doté d'un contrôleur de puissance (20), le détendeur (4) ayant une électronique de contrôle (40) configurée pour prendre en compte la mesure de la pression d'évaporation par un mesureur de pression (41), le système frigorifique (1) comprenant une électronique de supervision et de contrôle (8), le système frigorifique (1) étant conçu pour fonctionner selon deux situations :
- une situation d'augmentation de la demande frigorifique sur le circuit source (50), se manifestant par une température à l'entrée de l'évaporateur (5), mesurée par le mesureur (52), plus élevée qu'au pas de temps précédent, la puissance frigorifique fournie par le système (1) n'ayant pas changée, la température mesurée en sortie de l'évaporateur (5) s'élevant, l'électronique du contrôleur de puissance (20) augmentant le débit aspiré de frigorigène, la pression d'évaporation mesurée par le mesureur (41) diminuant, l'électronique de contrôle (40) du détendeur (4) recevant ce signal pour augmenter le débit liquide à l'entrée du détendeur (4), l'électronique de supervision (8) commandant l'accroissement de la masse circulante de fluide frigorigène ;
- une situation de diminution de la puissance de refroidissement requise par le circuit source (50), se manifestant par une température à l'entrée de l'évaporateur (5), mesurée par le mesureur (52), plus basse qu'au pas de temps précédent, la puissance frigorifique fournie par le système (1) n'ayant pas changée, la baisse de la température mesurée sur le circuit source (50) en sortie de l'évaporateur (5) et la baisse de la température de sortie du frigorigène de l'évaporateur (5) étant traitées par l'électronique du contrôleur de puissance (20) du compresseur (2), qui baisse le débit du frigorigène aspiré, et par l'électronique de contrôle (40) du détendeur (4) qui réduit le débit liquide à l'entrée du détendeur (4), l'électronique de supervision (8) commandant la réduction de la masse circulante de fluide frigorigène.

2. Système frigorifique (1) selon la revendication 1, **caractérisé en ce que** le réservoir (6) est connecté à la ligne de frigorigène liquide (7) par deux conduits, un premier conduit étant pourvu d'une vanne (61) permettant la décharge du fluide frigorigène vers le réservoir (6), et un deuxième conduit étant pourvu d'une vanne (62) permettant la décharge du fluide frigorigène vers le détendeur (4).

3. Système frigorifique (1) selon la revendication 1 ou 2, **caractérisé en ce qu'**il comprend, connectés aux moyens de supervision et de contrôle (8), un mesureur de pression (22) sur le circuit de fluide frigorigène reliant le compresseur (2) et le condenseur (3), et un mesureur de température (31) sur le circuit puits (30) en aval du condenseur (3).

4. Système frigorifique (1) selon l'une quelconque des revendications 1 à 3, **caractérisé en ce qu'**il comprend, connectés aux moyens de supervision et de contrôle (8), un mesureur de température (51) sur le circuit de fluide frigorigène reliant l'évaporateur (5) et le compresseur (2).

5. Système frigorifique (1) selon la revendication2, **caractérisé en ce que** la vanne (61) permettant la décharge du fluide frigorigène vers le réservoir (6), et la vanne (62) permettant la décharge du fluide frigorigène vers le détendeur (4) sont à ouverture commandée par les moyens de supervision et de contrôle (8).

6. Système frigorifique (1) selon l'une quelconque des revendications 1 à 5, **caractérisé en ce que** le fluide frigorigène comprend de l'ammoniac, un hydrocarbure, ou un fluide fluoré ou un mélange de fluides frigorigènes.

7. Procédé de fonctionnement d'un système frigorifique (1) tel que présenté dans l'une quelconque des revendications 1 à 6, **caractérisé en ce qu'**il comprend le maintien d'un sous-refroidissement prédéfini du fluide frigorigène sortant du condenseur (3) par contrôle dynamique de la masse circulante de fluide frigorigène, en transférant du fluide frigorigène dans ou vers le réservoir (6) installé en parallèle de la liaison liquide (7) entre le condenseur (3) et le détendeur (4), en fonction de l'écart de températures entre la température de condensation du liquide saturant (81) et la température de sortie du condenseur (3).

8. Procédé selon la revendication 7, **caractérisé en ce que** la température de condensation saturante (81) du liquide est calculée par l'électronique de supervision du système frigorifique (8) qui dispose en mémoire des propriétés thermodynamiques du fluide frigorigène chargé dans le système frigorifique (1).

9. Procédé selon la revendication 7 ou 8, **caractérisé en ce que** la phase gazeuse du fluide contenu dans le réservoir (6) est raccordée à la plus haute pression du système frigorifique (1), en amont du condenseur (3).

10. Procédé selon l'une quelconque des revendications 7 à 9, **caractérisé en ce qu'**il comprend une étape de diagnostic de fuite de fluide frigorigène hors du système frigorifique (1), par mise en rapport des températures d'entrée et de sortie du fluide refroidi dans l'évaporateur (5).

## Patentansprüche

1. Kühlsystem (1), umfassend einen Verdichter (2), einen Kondensator (3), einen Druckminderer (4), einen Verdampfer (5) und einen Kältemittelbehälter (6), wobei der Verdichter (2) für die Zirkulation eines Kältemittels sorgt, der Kondensator (3) durch ein in einem Well-Kreislauf (30) zirkulierendes Kühlmedium gekühlt wird, der Verdampfer (5) das Medium eines Quellkreislaufs (50) kühlt, eine Leitung für flüssiges Kältemittel (7) den Kondensator (3) mit dem Druckminderer (4) verbindet, der Verdampfer (5) nach dem Druckminderer (4) und vor dem Verdichter (2) angeordnet ist, das Kühlsystem (1) für einen Wärmetransfer von dem zu kühlenden Medium, das im Quellkreis (50) des Verdampfers (5) zirkuliert, zum Well-Kühlkreislauf (30) des Kondensators (3) sorgt, der Behälter (6) auf einer Leitung installiert ist, die zur Leitung für flüssiges Kältemittel (7) parallel verbunden ist, die den Kondensator (3) direkt mit dem Druckminderer (4) verbindet, **dadurch gekennzeichnet, dass** ein Temperaturmessgerät (52) zum Messen der Eintrittstemperatur des zu kühlenden Mediums auf dem Quellkreis (50) am Eingang des Verdampfers (5) ausgelegt ist, ein Temperaturmessgerät (53) zum Messen der Austrittstemperatur des zu kühlenden Mediums am Ausgang des Verdampfers (5) ausgelegt ist, wobei der Kompressor (2) mit einem Leistungsregler (20) ausgestattet ist, wobei der Druckminderer (4) eine Steuerelektronik (40) aufweist, die ausgelegt ist, um die Messung des Verdampfungsdrucks durch ein Druckmessgerät (41) zu berücksichtigen, wobei das Kühlsystem (1) eine Überwachungs- und Steuerelektronik (8) umfasst, wobei das Kühlsystem (1) für den Betrieb in zwei Situationen ausgelegt ist:
- in einer Situation mit steigendem Kältebedarf im Quellkreis (50), die sich durch eine Temperatur am Eingang des Verdampfers (5), gemessen vom Messgerät (52), ausdrückt, die höher ist als im vorherigen Zeitschritt, wobei sich die vom System (1) bereitgestellte Kälteleistung nicht geändert hat, die am Ausgang des Verdampfers (5) gemessene Temperatur steigt, die Elektronik des Leistungsreglers (20) den angesaugten Kältemitteldurchfluss erhöht, der vom Messgerät (41) gemessene Verdampfungsdruck abnimmt, die Steuerelektronik (40) des Druckminderers (4) dieses Signal empfängt, um den Flüssigkeitsdurchfluss am Eingang des Druckminderers (4) zu erhöhen, die Überwachungselektronik (8) die Erhöhung der zirkulierenden Kältemittelmasse befielt;
- in einer Situation mit sinkendem Kältebedarf im Quellkreis (50), die sich durch eine Temperatur am Eingang des Verdampfers (5), gemessen vom Messgerät (52), ausdrückt, die niedriger ist als im vorherigen Zeitschritt, wobei sich die vom System (1) bereitgestellte Kälteleistung nicht geändert hat, wobei die Absenkung der im Quellkreis (50) am Ausgang des Verdampfers (5) gemessene Temperatur und die Absenkung der Austrittstemperatur des Kältmittels aus dem Verdampfer (5) von der Elektronik des Leistungsreglers (20) des Kompressors (2) verarbeitet wird, der den Durchfluss des angesaugten Kältemittels senkt, und von der Steuerelektronik (40) des Druckminderers (4), die den Flüssigkeitsdurchfluss am Eingang des Druckminderers (4) reduziert, wobei die Überwachungselektronik (8) die Reduzierung der zirkulierenden Kältemittelmasse befielt.

2. Kühlsystem (1) nach Anspruch 1, **dadurch gekennzeichnet, dass** der Behälter (6) über zwei Leitungen mit der Leitung für flüssiges Kältemittel (7) verbunden ist, wobei eine erste Leitung mit einem Ventil (61) versehen ist, das das Ablassen des Kältemittels zum Behälter (6) ermöglicht, und eine zweite Leitung mit einem Ventil (62) versehen ist, das das Ablassen des Kältemittels zum Druckminderer (4) ermöglicht.

3. Kühlsystem (1) nach Anspruch 1 oder 2, **dadurch gekennzeichnet, dass** sie, verbunden mit den Überwachungs- und Steuermitteln (8), einen Druckmesser (22) auf dem Kältemittelkreislauf, der den Verdichter (2) und den Kondensator (3) verbindet, und einen Temperaturmesser (31) auf dem Well-Kreislauf (30) nach dem Kondensator (3) umfasst.

4. Kühlsystem (1) nach einem der Ansprüche 1 bis 3, **dadurch gekennzeichnet, dass** es in Verbindung mit den Überwachungs- und Steuermitteln (8) einen Temperaturmesser (51) auf dem Kältemittelkreislauf umfasst, der den Verdampfer (5) und den Verdichter (2) verbindet.

5. Kühlsystem (1) nach Anspruch 2, **dadurch gekennzeichnet, dass** das Ventil (61), das das Ablassen des Kältemittels zum Behälter (6) gestattet, und das Ventil (62), das das Ablassen des Kältemittels zum Druckminderer (4) gestattet, über die Überwachungs- und Steuermittel (8) gesteuert geöffnet wird.

6. Kühlsystem (1) nach einem der Ansprüche 1 bis 5, **dadurch gekennzeichnet, dass** das Kältemittel Ammoniak, einen Kohlenwasserstoff oder ein fluoriertes Kältemittel oder ein Kältemittelgemisch umfasst.

7. Verfahren zum Betrieb eines Kühlsystems (1) nach einem der Ansprüche 1 bis 6, **dadurch gekennzeichnet, dass** es die Aufrechterhaltung einer vordefinierten Unterkühlung des Kältemittels, das aus dem Kondensator (3) austritt, durch dynamische Steuerung der zirkulierenden Kältemittelmasse umfasst, indem Kältemittel in den oder zum Behälter (6) übertragen wird, der parallel zur Flüssigkeitsverbindung (7) zwischen dem Kondensator (3) und dem Druckminderer (4) installiert ist, in Abhängigkeit von der Temperaturdifferenz zwischen der Kondensationssättigungstemperatur der Flüssigkeit (81) und der Austrittstemperatur aus dem Kondensator (3).

8. Verfahren nach Anspruch 7, **dadurch gekennzeichnet, dass** die Kondensationssättigungstemperatur (81) der Flüssigkeit von der Überwachungselektronik des Kühlsystems (8) berechnet wird, die im Speicher über die thermodynamischen Eigenschaften des in das Kühlsystem (1) eingefüllten Kältemittels verfügt.

9. Verfahren nach Anspruch 7 oder 8, **dadurch gekennzeichnet, dass** die gasförmige Phase des im Behälter (6) enthaltenen Mittels mit dem höchsten Druck des Kühlsystems (1) vor dem Kondensator (3) verbunden ist.

10. Verfahren nach einem der Ansprüche 7 bis 9, **dadurch gekennzeichnet, dass** es einen Schritt zur Diagnose von Kältemittelleckagen nach außerhalb des Kühlystems (1) durch die Verknüpfung der Ein- und Ausgangstemperaturen des im Verdampfer (5) gekühlten Kältemittels umfasst.

## Claims

1. A refrigerating system (1) comprising a compressor (2), a condenser (3), an expansion valve (4), an evaporator (5) and a reservoir (6) for a refrigerant, the compressor (2) ensuring circulating of a refrigerant, the condenser (3) being cooled by a cooling medium circulating in a sink circuit (30), the evaporator (5) cooling the medium of a source circuit (50), a liquid refrigerant line (7) connecting the condenser (3) to the expansion valve (4), the evaporator (5) being placed downstream of the expansion valve (4) and upstream of the compressor (2), the refrigerating system (1) ensuring heat transfer of the medium to be cooled circulating in the source circuit (50) from the evaporator (5) to the sink circuit (30) for cooling the condenser (3), the reservoir (6) being installed on a line connected in parallel to the liquid refrigerant line (7) which directly connects the condenser (3) to the expansion valve (4), **characterised in that** a temperature meter (52) is configured to measure the inlet temperature of the medium to be cooled on the source circuit (50) at the inlet of the evaporator (5), a temperature meter (53) is configured to measure the outlet temperature of the medium to be cooled at the outlet of the evaporator (5), the compressor (2) being provided with a power controller (20), the expansion valve (4) having control electronics (40) configured to take the measurement of the evaporating pressure by a pressure meter (41) into account, the refrigerating system (1) comprising supervision and control electronics (8), the refrigerating system (1) being designed to operate according to two situations:
- a situation of increase in the refrigeration demand on the source circuit (50), manifested by a temperature at the inlet of the evaporator (5), measured by the meter (52), higher than in the previous time step, the refrigeration power supplied by the system (1) having not changed, the temperature measured at the outlet of the evaporator (5) rising, the electronics of the power controller (20) increasing the refrigerant sucked flow rate, the evaporation pressure measured by the meter (41) decreasing, the control electronics (40) of the expansion valve (4) receiving this signal to increase the liquid flow rate at the inlet of the expansion valve (4), the supervision electronics (8) controlling the increase in the circulating mass of refrigerant;
- a situation of decrease in the cooling power required by the source circuit (50), manifested by a temperature at the inlet of the evaporator (5), measured by the meter (52), lower than in the previous time step, the cooling power supplied by the system (1) having not changed, the decrease in the temperature measured on the source circuit (50) at the outlet of the evaporator (5) and the decrease in the outlet temperature of the refrigerant of the evaporator (5) being processed by the electronics of the power controller (20) of the compressor (2), which decreases the flow rate of the sucked refrigerant, and by the control electronics (40) of the expansion valve (4) which reduces the liquid flow rate at the inlet of the expansion valve (4), the supervision electronics (8) controlling the reduction in the circulating mass of refrigerant.

2. The refrigerating system (1) according to claim 1, **characterised in that** the reservoir (6) is connected to the liquid refrigerant line (7) trough two ducts, a first duct being provided with a valve (61) allowing discharge of the refrigerant to the reservoir (6), and a second duct being provided with a valve (62) allowing discharge of the refrigerant to the expansion valve (4).

3. The refrigerating system (1) according to claim 1 or 2, **characterised in that** it comprises, being connected to the supervision and control means (8), a pressure meter (22) on the refrigerant circuit connecting the compressor (2) and the condenser (3), and a temperature meter (31) on the sink circuit (30) downstream of the condenser (3).

4. The refrigerating system (1) according to any of claims 1 to 3, **characterised in that** it comprises, being connected to the supervision and control means (8), a temperature meter (51) on the refrigerant circuit connecting the evaporator (5) and the compressor (2).

5. The refrigerating system (1) according to claim 2, **characterised in that** the valve (61) allowing discharge of the refrigerant to the reservoir (6), and the valve (62) allowing discharge of the refrigerant to the expansion valve (4) are opening-controlled by the supervision and control means (8).

6. The refrigerating system (1) according to any of claims 1 to 5, **characterised in that** the refrigerant comprises ammonia, a hydrocarbon, or a fluorinated fluid or a mixture of refrigerants.

7. A method for operating a refrigerant system (1) as set forth in any of claims 1 to 6, **characterised in that** it comprises maintaining a predefined sub-cooling of the refrigerant leaving the condenser (3) by dynamically controlling the circulating mass of refrigerant, by transferring refrigerant into or to the reservoir (6) installed in parallel to the liquid connection (7) between the condenser (3) and the expansion valve (4), depending on the temperature difference between the condensing temperature of the saturating liquid (81) and the outlet temperature of the condenser (3).

8. The method according to claim 7, **characterised in that** the temperature of the saturating condensation (81) of the liquid is calculated by the supervision electronics of the refrigerating system (8) which has in memory thermodynamic properties of the refrigerant loaded in the refrigerating system (1).

9. The method according to claim 7 or 8, **characterised in that** the gaseous phase of the fluid contained in the reservoir (6) is connected to the highest pressure of the refrigerating system (1), upstream of the condenser (3).

10. The method according to any of claims 7 to 9, **characterised in that** it comprises a step of diagnosing refrigerant leak outside the refrigerating system (1), by correlating the inlet and outlet temperatures of the cooled fluid in the evaporator (5).
